# EUROPEAN PATENT APPLICATION

(11) **EP 3 550 706 A1**
(43) Date of publication of application: **09.10.2019**
(21) Application number: 19166644.5
(22) Date of filing: 01.04.2019
(51) Int. Cl.: H02M 1/36, H01H 9/56, H02H 9/00, H02M 1/08

(54) **INRUSH CURRENT SUPRESSION CIRCUIT CONTROLLING DEVICE, VOLTAGE CONVERSION SYSTEM, METHOD FOR CONTROLLING INRUSH CURRENT SUPRESSION CIRCUIT, AND PROGRAM**

(30) Priority: 04.04.2018 JP 2018072037
(71) Applicant: MITSUBISHI HEAVY INDUSTRIES THERMAL SYSTEMS, LTD., 108-8215 Tokyo (JP)
(72) Inventor: SUGIYAMA, Yuki, TOKYO, 108-8215 (JP); KASAI, Tatsuya, TOKYO, 108-8215 (JP); KUGA, Yuki, TOKYO, 108-8215 (JP)
(74) Representative: Cabinet Beau de Loménie

(57) **Abstract**

An inrush current suppression circuit controlling device which includes a switch which connects the AC power supply (P) to the load (14) at a startup, includes a zero cross detector (SE) which detects a zero cross of an input voltage input to the inrush current suppression circuit (13), a drive signal output unit (12) which outputs a drive signal for connecting the switch when a predetermined first time has passed after the zero cross is detected at a first startup, and a delay time record processing unit (12) which measures and records a delay time until a current flows through the switch detected after the drive signal is output, wherein the drive signal output unit outputs the drive signal for connecting the switch at a time at which a second time corresponding to the delay time has passed after the zero cross is detected at a second startup.

## Description

### [Technical Field]

The present invention relates to an inrush current suppression circuit controlling device, a voltage conversion system, a method for controlling an inrush current suppression circuit, and a program.

### [Background Art]

In a system including a capacitor input type converter circuit, a current which initially charges an electrolytic capacitor in the converter circuit flows when the system is started up (when a power supply is turned on). Thus, a current larger than a steady current, which is called an inrush current, temporarily flows. It is desirable that an inrush current be minimized because an electrical load on a circuit element such as a semiconductor element is large. Thus, in order to minimize an inrush current, an inrush current suppression circuit which includes a resistance element and a relay switch is used.

An inrush current suppression circuit forms a circuit in which a current flows to a converter circuit via a resistance element when a power supply is turned on and forms a circuit in which a current flows to the converter circuit without passing through the resistance element after the current has flowed through the converter circuit, by ON/OFF control of a relay switch. Thus, since a current flowing at the time of initial charging of an electrolytic capacitor is consumed by the resistance element, the inrush current is minimized. Furthermore, after the initial charging is completed, the circuit is switched by the relay switch so that a current flows through the converter circuit without passing through the resistance element. Thus, no loss is caused.

It should be noted that Patent Literature 1 discloses a relay controlling device capable of turning on a relay contact with a zero cross of an alternating current (AC) power supply with a simple circuit constitution with higher accuracy.

### [Citation List]

### [Patent Literature]

### [Patent Literature 1]

Japanese Unexamined Patent Application, First Publication No. 2014-216144

### [Summary of Invention]

### [Technical Problem]

In the above-described inrush current suppression circuit, minimizing an inrush current by connecting the resistance element is explained. However, when the relay switch is turned on at a time at which an input voltage input from the AC power supply is high, an inrush current instantaneously flows to the relay switch due to the influence of the parasitic capacitance in the inrush current suppression circuit. Thus, there the influence on a contact opening/closing lifespan of the relay switch is a concern.

An objective of the present invention is to provide an inrush current suppression circuit controlling device, a voltage conversion system, a method for controlling an inrush current suppression circuit, and a program capable of reducing a load of the inrush current suppression circuit.

### [Solution to Problem]

According to a first aspect of the present invention, an inrush current suppression circuit controlling device includes a switch provided between an alternating current (AC) power supply and a load and connects the AC power supply to the load at a startup, and includes: a zero cross detector which is configured to detect a zero cross of an input voltage input from the AC power supply to the inrush current suppression circuit; a drive signal output unit which is configured to output a drive signal for connecting the switch at a time at which a predetermined first time has passed after the zero cross is detected at a first startup; and a delay time record processing unit which is configured to measure and record a delay time until a current flows through the switch detected after the drive signal is output, wherein the drive signal output unit is configured to output the drive signal for connecting the switch at a time at which a second time corresponding to the delay time has passed after the zero cross is detected at a second startup.

According to a second aspect of the present invention, the drive signal output unit is configured to calculate the second time by subtracting the delay time and a zero cross detection delay time which is previously acquired from a half cycle of the input voltage at the second startup.

According to a third aspect of the present invention, the drive signal output unit is configured to output a drive signal for connecting the switch at a time at which the second time corresponding to a representative value of a plurality of the recorded delay times has passed.

According to a fourth aspect of the present invention, a voltage conversion system includes: the inrush current suppression circuit controlling device according to any one of the above aspects; the inrush current suppression circuit; and a converter circuit which is the load.

According to a fifth aspect of the present invention, a method for controlling an inrush current suppression circuit including a switch provided between an AC power supply and a load and connecting the AC power supply to the load at a startup includes: a step of detecting a zero cross of an input voltage input from the AC power supply to the inrush current suppression circuit; a step of outputting a drive signal for connecting the switch at a time at which a predetermined first time has passed after the zero cross is detected at a first startup; a step of measuring and recording the delay time until a current flows through the switch detected after the drive signal is output; and a step of outputting a drive signal for connecting the switch at a time at which a second time corresponding to the delay time has passed after the zero cross is detected at a second startup.

According to a sixth aspect of the present invention, a program causes a computer of an inrush current suppression circuit controlling device which includes a switch provided between an AC power supply and a load and connects the AC power supply to the load at a startup to execute the following steps: a step of detecting a zero cross of an input voltage input from the AC power supply to the inrush current suppression circuit; a step of outputting a drive signal for connecting the switch at a time at which a predetermined first time has passed after the zero cross is detected at a first startup; a step of measuring and recording a delay time until a current flows through the switch detected after the drive signal is output; and a step of outputting the drive signal for connecting the switch at a time at which a second time corresponding to the delay time has passed after the zero cross is detected at a second startup.

### [Advantageous Effects of Invention]

According to at least one of the above aspects, it is possible to reduce a load of an inrush current suppression circuit.

### [Brief Description of Drawings]

Fig. 1 is a diagram illustrating a circuit constitution of a voltage conversion system according to a first embodiment.
Fig. 2 is a diagram illustrating a circuit constitution of an inrush current suppression circuit according to the first embodiment.
Fig. 3 is a diagram illustrating a functional constitution of a microcomputer according to the first embodiment.
Fig. 4 is a diagram for describing a processing flow of a microcomputer according to the first embodiment.
Fig. 5 is a diagram for explaining a process of the microcomputer according to the first embodiment in detail.
Fig. 6 is a diagram for describing a processing flow of the microcomputer according to the first embodiment.
Fig. 7 is a diagram for explaining a process of the microcomputer according to the first embodiment in detail.

### [Description of Embodiments]

### <First embodiment>

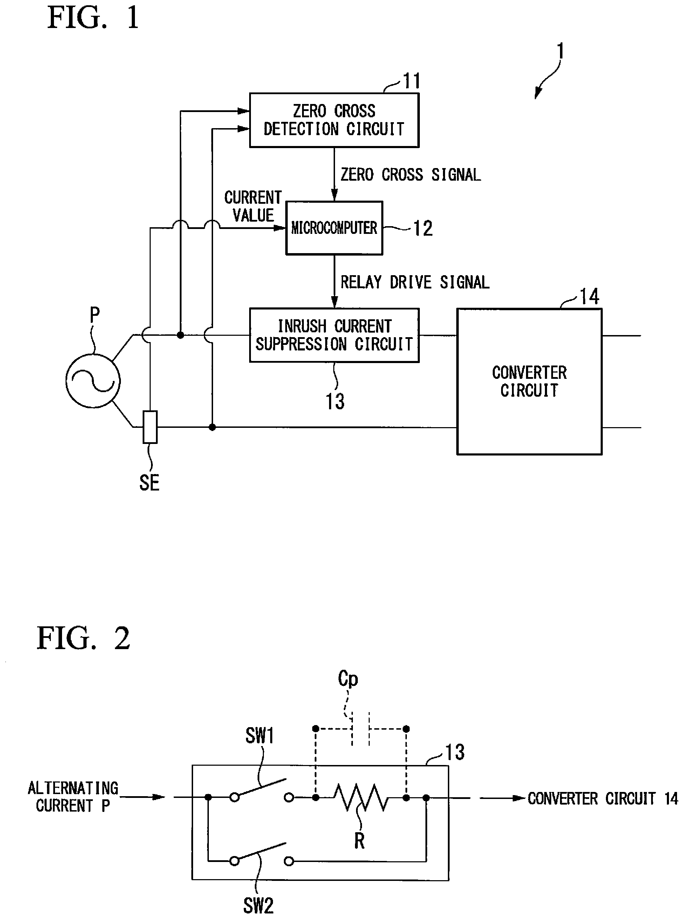

A voltage conversion system 1 according to a first embodiment will be described below with reference to Figs. 1 to 6.

### (Overall constitution of control device)

Fig. 1 is a diagram illustrating a circuit constitution of a voltage conversion system according to a first embodiment.

The voltage conversion system 1 illustrated in Fig. 1 is a voltage conversion system which converts an alternating current (AC) voltage supplied from an AC power supply P serving as a commercial power supply into a direct current (DC) voltage, which is applied to, for example, an air conditioner, a refrigerator, and the like.

As illustrated in Fig. 1, the voltage conversion system 1 includes a zero cross detection circuit 11, a microcomputer 12, an inrush current suppression circuit 13, and a converter circuit 14.

The zero cross detection circuit 11 detects a zero cross timing of an input voltage input from the AC power supply P and outputs a zero cross signal by which ON/OFF is switched in synchronization with the zero cross.

The microcomputer 12 is an aspect of an inrush current suppression circuit controlling device which controls the inrush current suppression circuit 13. The microcomputer 12 controls the inrush current suppression circuit 13 by operating the microcomputer 12 in accordance with a program prepared in advance. The microcomputer 12 receives a zero cross signal from the zero cross detection circuit 11 and a current value of a current flowing through the voltage conversion system 1 through a current sensor SE as inputs. Furthermore, the microcomputer 12 outputs a drive signal for controlling ON/OFF of the inrush current suppression circuit 13 (relay switches SW1 and SW2 which will be described later).

The inrush current suppression circuit 13 minimizes an inrush current generated when the power supply is turned on by being controlled by the microcomputer 12. The circuit constitution of the inrush current suppression circuit 13 will be described later.

The converter circuit 14 converts an AC voltage input from the AC power supply P into a DC voltage. The converter circuit 14 includes a rectifier circuit (not shown) and an electrolytic capacitor. When the power supply is turned on, a large current (an inrush current) for initially charging the electrolytic capacitor flows.

### (Circuit constitution of inrush current suppression circuit)

Fig. 2 is a diagram illustrating a circuit constitution of the inrush current suppression circuit according to the first embodiment.

As illustrated in Fig. 2, the inrush current suppression circuit 13 includes the relay switches SW1 and SW2 and a resistance element R.

The relay switch SW1 forms a circuit in which a current flows from the AC power supply P to the converter circuit 14 via the resistance element R by turning on the relay switch SW1. Furthermore, the relay switch SW2 forms a circuit in which a current flows from the AC power supply P to the converter circuit 14 without passing through the resistance element R by turning on the relay switch SW2.

By a drive signal from the microcomputer 12, when the power supply is turned on, the relay switch SW1 is turned on and the relay switch SW2 is opened (OFF). Thus, an inrush current associated with initial charging of the electrolytic capacitor of the converter circuit 14 is consumed by the resistance element R and an inrush current is minimized. Furthermore, after the initial charging of the electrolytic capacitor is completed, the relay switch SW1 is turned off and the relay switch SW2 is turned on. Thus, since a current is caused to flow through the converter circuit 14 without passing through the resistance element R, no loss is caused.

As illustrated in Fig. 2, the resistance element R has a parasitic capacitance Cp therein. For this reason, an inrush current which charges the parasitic capacitance Cp flows in accordance with a time at which the relay switch SW1 is turned on.

### (Functional constitution of microcomputer)

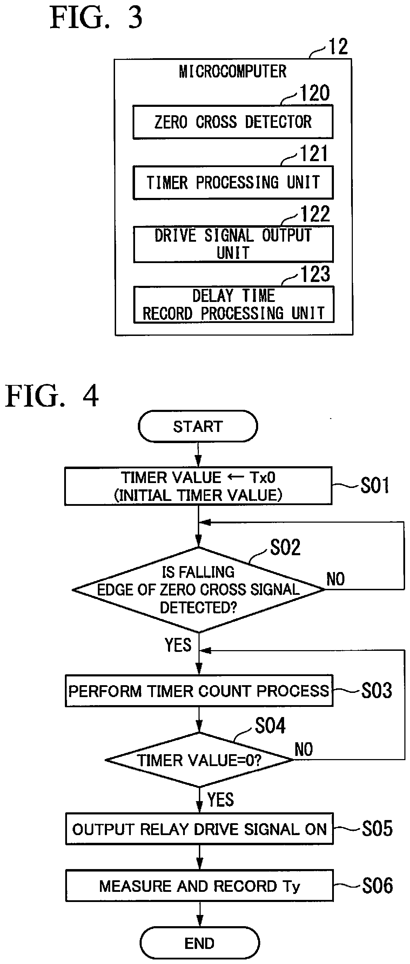

Fig. 3 is a diagram illustrating a functional constitution of the microcomputer according to the first embodiment.

As illustrated in Fig. 3, the microcomputer 12 functions as a zero cross detector 120, a timer processing unit 121, a drive signal output unit 122, and a delay time record processing unit 123 by operating the microcomputer 12 in accordance with a program prepared in advance.

The zero cross detector 120 acquires a zero cross signal from the zero cross detection circuit 11.

The timer processing unit 121 measures the passage of a set time. At an initial startup of the voltage conversion system 1, a predetermined initial timer value Tx0 (a first time) is set. Furthermore, upon second and subsequent startups of the voltage conversion system 1, an update timer value Tx (a second time) corresponding to a delay time Ty measured and recorded at the time of initial startup is set. The delay time Ty, the initial timer value Tx0, and the update timer value Tx will be described later.

The drive signal output unit 122 outputs a relay drive signal for connecting the relay switch SW1 when the passage of a predetermined time (the initial timer value Tx0 or the update timer value Tx) is detected by the timer processing unit 121.

The delay time record processing unit 123 measures and records the delay time Ty required for an operation of the relay switch SW1. To be specific, the delay time record processing unit 123 measures and records a time until a current flowing through the relay switch SW1 is detected after the drive signal output unit 122 outputs a relay drive signal as the delay time Ty required for the operation of the relay switch SW1.

### (Processing flow of microcomputer at initial startup)

Fig. 4 is a diagram for describing a processing flow of the microcomputer according to the first embodiment.

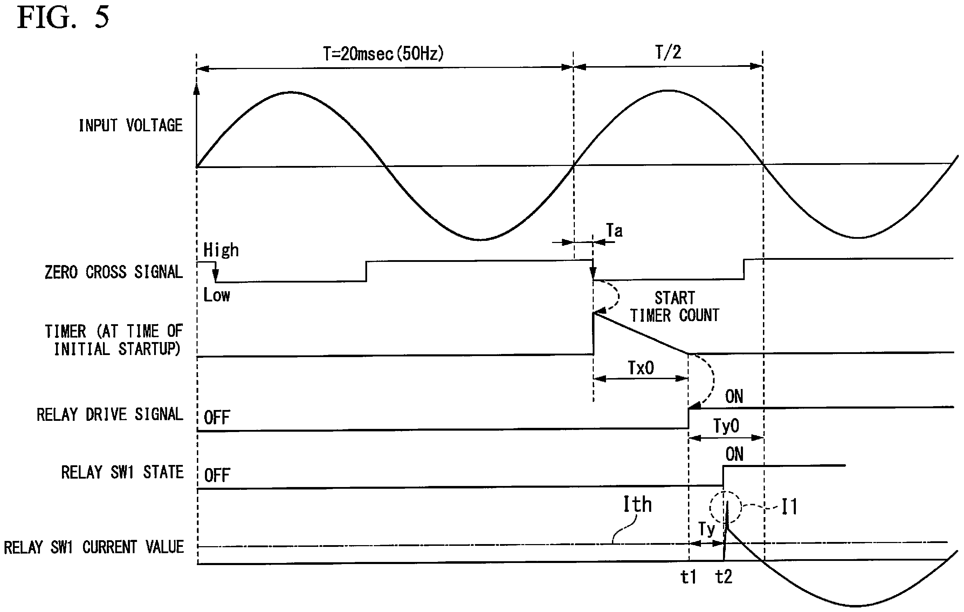

Fig. 5 is a diagram for explaining a process of the microcomputer according to the first embodiment in detail.

A flow of a process of the microcomputer 12 at the time of initial startup of the voltage conversion system 1 will be described in detail below with reference to Figs. 4 and 5.

In this embodiment, the processing flow illustrated in Fig. 4 is performed at the time of initial startup of the voltage conversion system 1. It should be noted that, in a state immediately after the startup of the voltage conversion system 1, both of the relay switches SW1 and SW2 of the inrush current suppression circuit 13 are opened.

When the microcomputer 12 is turned on, first, the microcomputer 12 sets the predefined initial timer value Tx0 (the first time) in the timer processing unit 121 (Step S01).

Subsequently, the zero cross detector 120 in the microcomputer 12 acquires a zero cross signal input from the zero cross detection circuit 11. A zero cross signal will be described in detail below with reference to Fig. 5.

As illustrated in Fig. 5, an input voltage from the AC power supply P is, for example, a sine wave with a period T=20 msec (50 Hz). A zero cross signal output from the zero cross detection circuit 11 repeatedly transits between a high potential (High) and a low potential (Low) at a zero crossing timing of an input voltage of a period T. It should be noted that, as illustrated in Fig. 5, the zero cross signal is switched from High to Low at a timing delayed by a predetermined delay time (a zero cross detection delay time Ta) from a zero crossing time at which a negative half cycle of an input voltage changes to a positive half cycle. The zero cross detection delay time Ta is measured in advance through measurement, simulation, or the like performed in advance and is recorded in the microcomputer 12.

Referring again to Fig. 4, the timer processing unit 121 in the microcomputer 12 determines whether or not the falling edge of the zero cross signal (High→Low transition) illustrated in Fig. 5 is detected (Step S02). When the falling edge of the zero cross signal is not detected (Step S02: NO), the process of the timer processing unit 121 returns to the determination process of Step S02 without performing a timer count process.

When the falling edge of the zero cross signal is detected (Step S02: YES), the timer processing unit 121 starts a timer count process of a timer value (an initial timer value Tx0) set in Step S01 (Step S03).

The timer processing unit 121 determines whether or not the timer value is zero (Step S04). When the timer value is not zero (Step S04: NO), the timer processing unit 121 repeats the timer count process of Step S03. When the timer value is zero (Step S04: YES), the drive signal output unit 122 in the microcomputer 12 outputs a relay drive signal by which the relay switch SW1 is turned on (Step S05).

Also, the delay time record processing unit 123 in the microcomputer 12 monitors a current value through the current sensor SE. Moreover, the delay time record processing unit 123 measures a delay time Ty until a current flowing through the relay switch SW1 is detected after the drive signal output unit 122 outputs a relay drive signal toward the relay switch SW1 and records the measured delay time Ty in a nonvolatile memory (Step S06).

The delay time Ty will be described in detail with reference to Fig. 5.

In the relay switch SW1 (and the relay switch SW2), a delay occurs until the relay switch SW1 (and the relay switch SW2) is actually turned on (in a conduction state) after the relay switch SW1 (and the relay switch SW2) receives an input of the relay drive signal from the microcomputer 12. In the example illustrated in Fig. 5, a relay drive signal is output from the drive signal output unit 122 to the relay switch SW1 at a timing (time t1) at which the time of the initial timer value Tx0 has passed from a timer counter start time. However, the relay switch SW1 is actually turned on at time t2 delayed by the delay time Ty after the relay switch SW1 receives an input of the relay drive signal. The delay time record processing unit 123 measures and records this delay time Ty. To be specific, the delay time record processing unit 123 records a time between a time at which the drive signal output unit 122 outputs the relay drive signal and a time at which a current value exceeding a determination threshold value Ith is detected through the current sensor SE. Thus, the delay time Ty associated with the relay switch SW1 is measured.

It should be noted that, according to the example illustrated in Fig. 5, an input voltage at the time t2 at which the relay switch SW1 is turned on is not close to zero. For this reason, as illustrated in Fig. 5, an inrush current I1 is generated due to the parasitic capacitance Cp (Fig. 2) of the resistance element R at the moment at which the relay switch SW1 is turned on (time t2). In this way, since the inrush current I1 is generated at a time at which the relay switch SW1 is turned on, the time t2 at which the relay switch SW1 is actually turned on substantially coincides with a time at which a current value acquired through the current sensor SE exceeds the determination threshold value Ith. Therefore, it is possible to accurately measure the delay time Ty of the relay switch SW1 by measuring a time between a time t1 at which the relay drive signal is output to the relay switch SW1 and a time at which the current value exceeding the determination threshold value Ith is detected through the current sensor SE.

On the other hand, assuming that the input voltage at the time 2 at which the relay switch SW1 is turned on is close to zero, since the input voltage is not applied at the moment at which the relay switch SW1 is turned on, the inrush current 11 is not generated. Thus, the time t2 at which the relay switch SW1 is actually turned on does not coincide with the time at which the current value acquired through the current sensor SE exceeds the determination threshold value Ith and it is not possible to accurately measure the delay time Ty of the relay switch SW1. For this reason, it is desirable that in consideration of an unknown delay time Ty, the initial timer value Tx0 applied at the time of initial startup be defined in advance so that the inrush current 11 is necessarily generated (the input voltage is not close to zero) at the moment at which the relay switch SW1 is turned on.

For example, it is desirable that the initial timer value Tx0 be defined in advance so that a sum of the initial timer value Tx0 and the zero cross detection delay time Ta is close to a phase of 90° of the input voltage (for example, within a range of phases 60° to 120°).

### (Processing flow of microcomputer at second and subsequent startups)

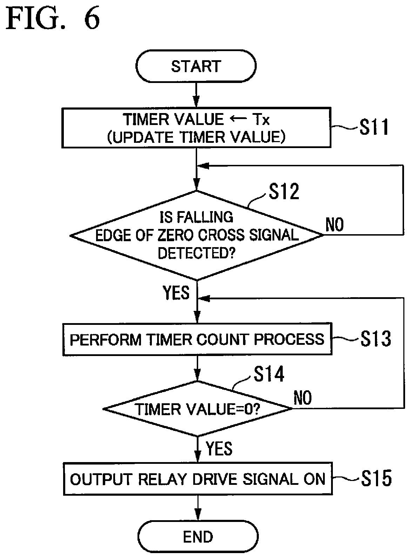

Fig. 6 is a diagram for describing a processing flow of the microcomputer according to the first embodiment.

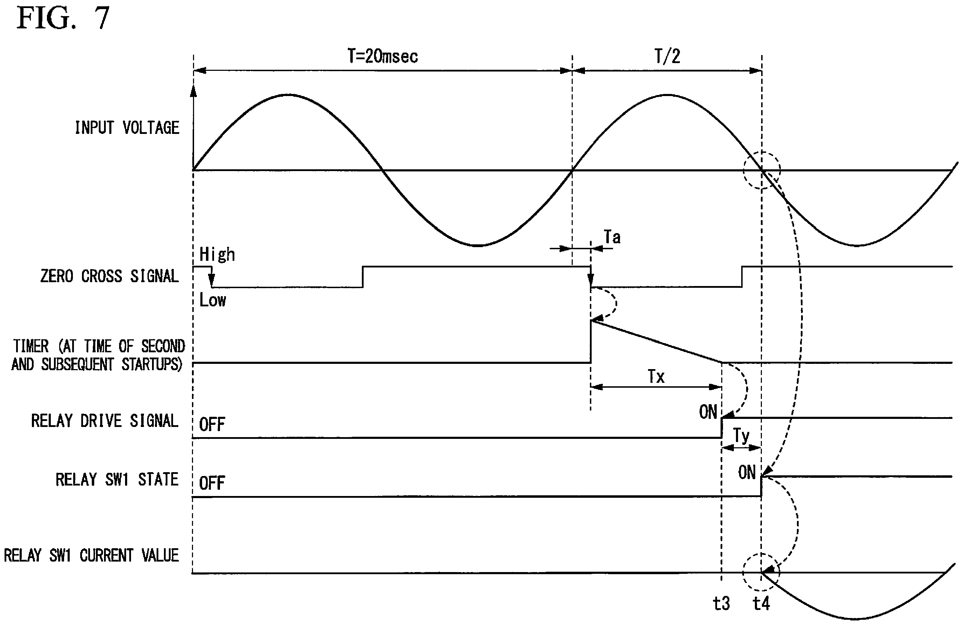

Fig. 7 is a diagram for explaining a process of the microcomputer according to the first embodiment in detail.

A flow of the process of the microcomputer 12 at the second and subsequent startups of the voltage conversion system 1 will be described in detail below with reference to Figs. 6 and 7.

In this embodiment, the processing flow illustrated in Fig. 6 is performed at the second and subsequent startups of the voltage conversion system 1. It should be noted that, in the stage immediately after the voltage conversion system 1 is started up, both of the relay switches SW1 and SW2 of the inrush current suppression circuit 13 are opened.

When the microcomputer 12 is turned on, first, the microcomputer 12 reads and acquires the delay time Ty recorded in the nonvolatile memory. Moreover, the microcomputer 12 calculates the update timer value Tx (the second time) by subtracting the zero cross detection delay time Ta and the delay time Ty from the half cycle T/2 of the input voltage (Tx=T/2-Ta-Ty). The microcomputer 12 sets the update timer value Tx calculated as described above in the timer processing unit 121 (Step S11).

Subsequently, the timer processing unit 121 in the microcomputer 12 determines whether or not the falling edge of the zero cross signal (High→Low transition) illustrated in Fig. 7 is detected (Step S12). When the falling edge of the zero cross signal is not detected (Step S12: NO), the process of the timer processing unit 121 returns to the determination process of Step S12 without performing the timer count process.

When the falling edge of the zero cross signal is detected (Step S12: YES), the timer processing unit 121 starts the timer count process of the timer value (the update timer value Tx) set in Step S11 (Step S13).

The timer processing unit 121 determines whether or not the timer value is zero (Step S14). When the timer value is not zero (Step S14: NO), the timer processing unit 121 repeats the timer count process of Step S13. When the timer value is zero (Step S14: YES), the drive signal output unit 122 of the microcomputer 12 outputs the relay drive signal by which the relay switch SW1 is turned on (Step S15).

According to the above process, the relay switch SW1 is turned on at time t4 at which delay time Ty has passed from time t3 at which the relay drive signal is output in Step S15. Here, the update timer value Tx applied at the second and subsequent startups is defined as "Tx=T/2-Ta-Ty" using the delay time Ty measured at the time of initial startup. For this reason, as illustrated in Fig. 7, the time t4 at which the relay switch SW1 is actually turned on coincides with the time at which the input voltage is zero. Thus, an inrush current flowing due to the parasitic capacitance Cp of the resistance element R is minimized at the moment at which the relay switch SW1 is turned on at the time t4.

### (Action and effect)

As described above, the microcomputer 12 according to the first embodiment is a controlling device of the inrush current suppression circuit 13 having the relay switch SW1 which is provided between the AC power supply P and the converter circuit 14 which is a load and connects the AC power supply P to the converter circuit 14 at the time of starting up the voltage conversion system 1.

This microcomputer 12 includes a zero cross detector 120 which detects a zero cross of the input voltage input from the AC power supply P to the inrush current suppression circuit 13, a drive signal output unit 122 which outputs a relay drive signal for connecting the relay switches when the first time (the initial timer value Tx0) has passed after the zero cross is detected at the time of first startup (at the time of initial startup), and a delay time record processing unit 123 which measures and records the delay time Ty until the current flowing through the relay switch SW1 is detected after the relay drive signal is output.

Moreover, the drive signal output unit 122 outputs the relay drive signal for connecting the relay switch SW1 when the second time (the update timer value Tx) corresponding to the delay time Ty has passed after the zero cross is detected at the time of second startup (at the second and subsequent startups).

Thus, by taking into account the actual delay time Ty of the relay switch SW1 measured at the time of initial startup, the relay switch SW1 can be brought into an ON state with high accuracy near the zero cross of the input voltage.

Therefore, it is possible to minimize a decrease in contact opening/closing lifespan of the relay switch SW1.

Also, the microcomputer 12 according to the first embodiment outputs the relay drive signal at the time at which the initial timer value Tx0 defined in advance has passed on the basis of the zero cross of the input voltage at the time of initial startup.

Thus, by appropriately defining the initial timer value Tx0, it is possible to surely generate the inrush current I1 in the relay switch SW1 at the moment at which the relay switch SW1 is turned on, and in turn, it is possible to accurately measure the delay time Ty.

Although the voltage conversion system 1 according to the first embodiment has been described in detail above, specific aspects of the voltage conversion system 1 are not limited to those described above and it is possible to add various design modifications and the like without departing from the gist of the present invention.

For example, although the microcomputer 12 according to the first embodiment is configured to detect the falling edge of the zero cross signal and start the timer count process, in other embodiments, the present invention is not limited to this aspect and the microcomputer 12 may be configured to detect the rising edge of the zero cross signal and start the timer count process.

Also, although a case in which the microcomputer 12 according to the first embodiment measures and records the delay time Ty of the relay switch SW1 at the time of initial startup and the update timer value Tx corresponding to the recorded delay time Ty is set at the second and subsequent startups has been described, the present invention is not limited to this aspect in other embodiments

The microcomputer 12 according to another embodiment may have the following aspect.

For example, the microcomputer 12 performs the processing flow illustrated in Fig. 4 at the time of first to tenth startups and records ten delay times Ty00, Ty01, ..., and Ty09. Moreover, at the time of eleventh and subsequent startups, the microcomputer 12 performs the processing flow illustrated in Fig. 6, calculates a representative value (an average value, a median value, the most frequent value, and the like) of the ten delay times Ty00, Ty01, ..., and Ty09 as a new delay time Ty, and calculates an update timer value Tx corresponding to the representative value.

Thus, since measurement variations of the delay time Ty of the relay switch SW1 can be reduced, the relay switch SW1 can be brought into an ON state more accurately in the vicinity of the zero cross of the input voltage.

Furthermore, the microcomputer 12 according to another embodiment may have the following aspect.

For example, the microcomputer 12 applies a representative value (an average value, a median value, the most frequent value, and the like) of ten delay times Ty01, Ty02, ..., and TylO recorded at the time of first to tenth startups to an update timer value Tx at the time of eleventh to 100th startups. Furthermore, for example, the microcomputer 12 applies a representative value (an average value, a median value, the most frequent value, and the like) of ten delay times Ty10, Ty11, ..., and Ty19 recorded at the time of 101st to 110th startups to the update timer value Tx at the time of 111st to 200th startups.

Thus, the relay switch SW1 can be brought into an ON state with high precision close to the zero cross of the input voltage even when the delay time of the relay switch SW1 changes with time.

In each of the embodiments described above, the above processes of the various processes of the microcomputer 12 are stored in a computer-readable recording medium in the form of a program and the above various processes are performed by reading and executing this program by a computer. Furthermore, a computer-readable recording medium is a magnetic disk, a magneto-optical disk, a CD-ROM, a DVD-ROM, a semiconductor memory, or the like. In addition, this computer program may be delivered to the computer through a communication line and the computer which receives the distribution may execute the program.

The above program may be for realizing a part of the above-described functions. Furthermore, the above program may be a so-called difference file (a differential program), which can realize the above-described function in combination with a program recorded in advance in the computer system.

Also, the microcomputer 12 may be constituted of a single computer having all of the above various functions or a plurality of computers having each part of the functions thereof and connected to each other to be able to communicate with each other.

While several embodiments of the present invention have been described above, these embodiments are presented by way of examples and are not intended to limit the scope of the invention. The embodiments described above can be implemented in various other forms and various omissions, substitutions, and modifications are possible without departing from the gist of the invention. These modifications are included in the scope and gist of the invention as well as within the invention described in the claims and the scope equivalent thereto.

### [Reference Signs List]

1 Voltage conversion system
11 Zero cross detection circuit
12 Microcomputer (inrush current suppression circuit controlling device)
120 Zero cross detector
121 Timer processing unit
122 Drive signal output unit
123 Delay time record processing unit
13 Inrush current suppression circuit
14 Converter circuit
SW1, SW2 Relay switch
R Resistance element
Cp Parasitic capacitance

## Claims

1. An inrush current suppression circuit controlling device which includes a switch (SW1) provided between an alternating current (AC) power supply (P) and a load (14) and connects the AC power supply (P) to the load (14) at a startup, the inrush current suppression circuit controlling device comprising:
a zero cross detector (SE) which is configured to detect a zero cross of an input voltage input from the AC power supply (P) to the inrush current suppression circuit (13);
a drive signal output unit (12) which is configured to output a drive signal for connecting the switch (SW1) at a time at which a predetermined first time (Tx0) has passed after the zero cross is detected at a first startup; and
a delay time record processing unit (12) which is configured to measure and record a delay time (Ty) until a current flows through the switch (SW1) detected after the drive signal is output,
wherein the drive signal output unit (12) is configured to output the drive signal for connecting the switch (SW1) at a time at which a second time (Tx) corresponding to the delay time (Ty) has passed after the zero cross is detected at a second startup.

2. The inrush current suppression circuit controlling device according to claim 1, wherein the drive signal output unit (12) is configured to calculate the second time (Tx) by subtracting the delay time (Ty) and a zero cross detection delay time (Ta) which is previously acquired from a half cycle (T/2) of the input voltage at the second startup.

3. The inrush current suppression circuit controlling device according to claim 1 or 2, wherein the drive signal output unit (12) is configured to output a drive signal for connecting the switch (SW1) at a time at which the second time (Tx) corresponding to a representative value of a plurality of the recorded delay times (Ty) has passed.

4. A voltage conversion system, comprising:
the inrush current suppression circuit controlling device according to any one of claims 1 to 3;
the inrush current suppression circuit (13); and
a converter circuit (14) which is the load.

5. A method for controlling an inrush current suppression circuit which includes a switch (SW1) provided between an AC power supply (P) and a load (14) and connects the AC power supply (P) to the load (14) at a startup, the method for controlling the inrush current suppression circuit comprising:
a step of detecting a zero cross of an input voltage input from the AC power supply (P) to the inrush current suppression circuit (13);
a step of outputting a drive signal for connecting the switch (SW1) at a time at which a predetermined first time (Tx0) has passed after the zero cross is detected at a first startup;
a step of measuring and recording a delay time (Ty) until a current flows through the switch (SW1) detected after the drive signal is output; and
a step of outputting the drive signal for connecting the switch (SW1) at a time at which a second time (Tx) corresponding to the delay time (Ty) has passed after the zero cross is detected at a second startup.

6. A program causing a computer of an inrush current suppression circuit controlling device which includes a switch (SW1) provided between an AC power supply (P) and a load (14) and connects the AC power supply (P) to the load (14) at a startup to execute the following steps:
a step of detecting a zero cross of an input voltage input from the AC power supply (P) to the inrush current suppression circuit (13);
a step of outputting a drive signal for connecting the switch (SW1) at a time at which a predetermined first time (Tx0) has passed after the zero cross is detected at a first startup;
a step of measuring and recording a delay time (Ty) until a current flows through the switch (SW1) detected after the drive signal is output; and
a step of outputting the drive signal for connecting the switch (SW1) at a time at which a second time (Tx) corresponding to the delay time (Ty) has passed after the zero cross is detected at a second startup.
